# EUROPÄISCHE PATENTSCHRIFT

(11) **EP 2 049 300 B1**
(45) Veröffentlichungstag und Bekanntmachung des Hinweises auf die Patenterteilung: **06.01.2010**
(21) Anmeldenummer: 07787948.4
(22) Anmeldetag: 26.07.2007
(51) Int. Cl.: B23K 15/00, B23K 26/14, B23K 26/24, B23K 26/42, C21D 9/50, C25D 17/10

(54) **VERFAHREN ZUR HERSTELLUNG EINES KORROSIONSBESTÄNDIGEN UND UMFORMBAREN BLECHS MIT VOLLFLÄCHIGEM BESCHICHTEN DER GEFÜGTEN THERMISCH BEHANDELTEN STAHLBLECHE**
METHOD FOR PRODUCING A CORROSION-RESISTANT, WORKABLE SHEET METAL WITH FULL-SURFACE COATING OF THE JOINED, THERMALLY TREATED STEEL SHEETS
PROCEDE POUR FABRIQUER UNE TOLE RESISTANTE A LA CORROSION ET FAÇONNABLE

(30) Priorität: 04.08.2006 DE 102006036871; 13.02.2007 DE 102007007590
(43) Veröffentlichungstag der Anmeldung: 22.04.2009
(73) Patentinhaber: Rasselstein GmbH, 56626 Andernach (DE)
(72) Erfinder: BAULIG, Harald, 56218 Mülheim-Kärlich (DE); BAUMANN, Bernd, 56567 Neuwied (DE); KESSELEM, Josef, 56626 Andernach (DE); OBERHOFFER, Helmut, 56727 St. Johann (DE); LINK, Andrea, 56299 Ochtendung (DE); SAUER, Reiner, 56566 Neuwied (DE); FRIEDRICH, Karl Ernst, 47447 Moers (DE)
(74) Vertreter: Charrier, Rapp & Liebau
(86) Internationale Anmeldenummer: PCT/EP2007/057729
(87) Internationale Veröffentlichungsnummer: WO 2008/015158

(56) Entgegenhaltungen:
- EP-A- 0 659 518
- DE-A1- 19 809 487
- FR-A- 2 854 827
- GB-A- 1 320 640
- JP-A- 62 061 790
- US-A- 4 441 238
- US-A- 4 879 448
- DATABASE WPI Week 199749 Derwent Publications Ltd., London, GB; AN 1997-527094 XP002456823 & CN 1 126 126 A (UNIV HUAZHONG SCI & ENG) 10. Juli 1996 (1996-07-10)

## Beschreibung

Die Erfindung betrifft Verfahren zur Herstellung von korrosionsbeständigen und umformbaren Blechen gemäß dem Oberbegriff der Ansprüche 1 und 2 (siehe, z.B.,EP 659 518 für Anspruch 1 und FR 2 854 827 für Anspruch 2). Mit diesen Verfahren hergestellte Bleche können für die Herstellung von Behältern zur Verpackung von Lebensmitteln, beispielsweise Konserven- oder Getränkedosen, verwendet werden oder auch in anderen Bereichen, in denen korrosionsbeständige und gut umformbare Bleche benötigt werden, bspw. zur Herstellung von Kfz-Karosserieteilen. Zur Verwendung von Blechen für die Herstellung von Lebensmittelverpackungen oder Kfz-Karosserieteilen müssen die Bleche korrosionsbeständig sein. Bei Lebensmittelverpackungen muss das Blech bspw. so korrosionsbeständig sein, dass die Blechoberfläche nicht durch das aggressive Füllgut angegriffenen wird. Aus diesem Grunde werden Stahlbleche, die für die Herstellung von Lebensmittelverpackungen verwendet werden sollen, mit einer korrosionsbeständigen Beschichtung versehen. Es kann sich hier beispielsweise um eine metallische Beschichtung handeln, wie dies bei Weißblech (verzinntes Stahlblech) der Fall ist.

Zur Herstellung von Lebensmittelverpackungen muss das beschichtete Blech dann beispielsweise in einem Tiefziehverfahren umgeformt werden. Bei der Herstellung der beschichteten Bleche werden üblicherweise fehler- oder schadhafte Stellen im Blech herausgeschnitten und die fehlerfreien Blechteile werden anschließend zur Bildung eines Blechbandes mit einer Normlänge zusammengeschweißt und auf eine Rolle aufgewickelt. Solche aus mehreren Stahlblechen zusammengeschweißte Blechbänder weisen ein nicht zufrieden stellendes Umformverhalten auf, weil das Blech im Bereich der Schweißnähte unzureichend umformbar ist. Zur Herstellung von Konservendosen werden bspw. korrosionsbeständige Stahlbleche verwendet, die aus einem verschweißten Rumpf und zwei aufgefalzten Deckeln zusammengesetzt sind. Im Bereich der Schweißnähte weist das aus den einzelnen Stahlblechen zusammengesetzte Blech eine deutlich höhere Härte als die einzelnen Stahlbleche auf, woraus die schlechtere Umformbarkeit des Blechs im Bereich der Schweißnähte resultiert.

Im Stand der Technik wurden deshalb bereits Verfahren zur Herstellung von umformbaren Stahlblechen vorgeschlagen, mit denen eine Erniedrigung der Härte der Schweißnähte von aus mindestens zwei aneinander gefügten Stahlblechen erzielt werden soll, um deren Umformbarkeit zu verbessern. Aus der EP 540 382 A1 ist beispielsweise ein Verfahren zum Herstellen eines tiefziehbaren Stahlblechs bekannt, das aus mindestens zwei Elementen gebildet ist, bei dem die Ränder der Elemente durch Strahlschweißen verschweißt werden, wobei zur Erniedrigung der Härte der Schweißnaht vor dem Schweißen die Schweißränder der Elemente mit einem Laserstrahl überstrichen und gleichzeitig Sauerstoff zugeführt wird. Dadurch wird eine Entkohlung und eine Oxidation der Ränder bewirkt.

Nachteilig wirkt sich der vorlaufende Laserstrahl insbesondere bei dünnen Blechdicken auf die geometrische Ausbildung des Blechrandes aus, da infolge des thermischen Energieeintrages der Werkstoff über seine Plastizitätsgrenze gedehnt wird, was zu erhöhten Eigenspannungen und zu Bauteilverzügen am Blechrand führt. Eine exakte Ausführung der nachfolgenden Laserschweißung ohne Höhenversatz, alternierenden Schweißnahtbreiten und mit gleichmäßiger Nahtgeometrie erscheint daher nicht erzielbar, muss jedoch für optimale Umformergebnisse vorhanden sein. Weiterhin führt diese Art der Wärmebehandlung in Verbindung mit einer Werkstoffentkohlung zur Bildung ausgeprägter Wärmeeinflusszonen mit sehr weichem Gefüge, an denen der Werkstoff bei Umformoperationen immer zuerst versagt. Auch birgt die Zuführung von Sauerstoff in den Schweißbereich die Gefahr der Werkstoffversprödung und von oberflächlichen Oxidationserscheinungen in Bereichen neben der Schweißnaht, wo die Temperatur unterhalb der Zersetzungstemperatur von FeO₂ in Fe und O₂ verbleibt.

Hiervon ausgehend liegt der Erfindung die Aufgabe zu Grunde, ein möglichst korrosionsbeständiges und gut umformbares Blech bereit zu stellen, das aus einzelnen, miteinander verschweißten Stahlblechen zusammengesetzt ist.

Gelöst wird diese Aufgabe mit den Verfahren nach den Ansprüche 1 und 2. Bevorzugte Ausführungsbeispiele dieser Verfahren sind den Unteransprüchen zu entnehmen.

Nachfolgend wird die Erfindung anhand von Ausführungsbeispielen unter Bezugnahme auf die begleitenden Zeichnungen näher erläutert. Die Zeichnungen zeigen.
- **Fig. 1:**: Schematische Darstellung eines Teilschritts der erfindungsgemäßen Verfahren anhand eines Längsschnitts durch eine Schweißnaht von zwei aneinander gefügten Stahlblechen;
- **Fig. 2:**: Draufsicht auf die aneinander gefügten Stahlbleche während eines Teilschritts der erfindungsgemäßen Verfahren;
- **Fig. 3:**: Darstellung eines Temperatur-Zeit-Abkühldiagrammes einer Schweißnaht während eines Verfahrensschritts des erfindungsgemäßen Verfahrens;
- **Fig. 4a:**: Querschnitt durch eine im Verfahren verwendbare Vorrichtung zur elektrolytischen Galvanisierung einer Schweißnaht in einem Stahlblech mit einer metallischen Beschichtung, dargestellt im Prozessschritt während der elektrolytischen Galvanisierung der Schweißnaht;
- **Figur 4b:**: Schnittdarstellung der Vorrichtung von Figur 4a während der Durchführung eines Reinigungsschritts zur Reinigung der galvanisierten Schweißnaht;
- **Figur 4c:**: Draufsicht auf die obere Anodenleiste der Vorrichtung von Figur 4a;
- **Figur 5:**: Schematische Darstellung einer Einrichtung zum automatisierten Regenerieren einer Auftragseinrichtung der Vorrichtung von Figur 1 zum Aufbringen eines Elektrolyten auf die Schweißnaht;
- **Figur 6:**: Schematische Darstellung der Reinigungseinheit der Vorrichtung von Figur 4;
- **Figur 7:**: Schnittdarstellung der Reinigungseinheit von Figur 6;
- **Figur 8:**: Schnittdarstellung einer möglichen Form der Anode der Vorrichtung von Figur 4;
- **Figur 9:**: Schematische Darstellung einer Auftragseinrichtung der Vorrichtung von Figur 4 zum Aufbringen eines Elektrolyten auf die Schweißnaht;
- **Figur 10:**: Schnittdarstellung der Vorrichtung von Figur 4 während der Durchführung eines Trocknungsschritts zur Trocknung der galvanisierten und gereinigten Schweißnaht.

Nach einem Verfahren der Erfindung wird ein korrosionsbeständiges und gut umformbares Blech aus zwei oder mehr unbeschichteten Stahlblechen mit Blechdicken zwischen 0,10mm und 0,70mm hergestellt, indem die blanken Stahlbleche zunächst auf Stumpfstoß aneinander gelegt und anschließend jede Stoßfuge durch Stumpfstoßschweißen mittels eines Schweißstrahls unter Ausbildung einer Schweißnaht verschweißt wird. Bei dem Schweißstrahl kann es sich um einen Laserschweißstrahl oder einen Elektronenschweißstrahl handeln. Während oder unmittelbar nach dem Schweißen erfolgt eine thermische Behandlung jeder Schweißnaht mittels eines Glühstrahls, der bevorzugt von einem Laserstrahl gebildet wird. Nach Abkühlen der Schweißnähte wird das aus den zusammengeschweißten Stahlblechen gebildete Blech mit einer metallischen Beschichtung zumindest einseitig oder auch doppelseitig beschichtet, wobei auch die oder jede Schweißnaht einseitig oder doppelseitig beschichtet wird.

Nach einem weiteren Verfahren der Erfindung wird ein korrosionsbeständiges und gut umformbares Blech aus zwei oder mehr mit einer metallischen Beschichtung überzogenen Stahlblechen hergestellt, wobei zunächst die beschichteten Stahlbleche auf Stoß aneinandergelegt und anschließend die oder jede Stoßfuge durch Stumpfstoßschweißen mittels eines Schweißstrahls unter Ausbildung einer Schweißnaht längs der jeweiligen Stoßfuge verschweißt werden. Während oder unmittelbar nach dem Verschweißen wird jede Schweißnaht mittels eines Glühstrahls thermisch behandelt. Nach Abkühlen der Schweißnähte wird jede Schweißnaht mit einer streifenförmigen, metallischen Beschichtung einseitig oder doppelseitig abgedeckt. Die Beschichtung der Schweißnähte erfolgt hierbei bevorzugt durch Galvanisierung der jeweiligen Schweißnaht.

Aufgrund der thermischen Behandlung der Schweißnähte während oder unmittelbar nach dem Verschweißen wird gemäß der Erfindung die Temperatur der Schweißnaht beim Abkühlen über einen bestimmten Zeitraum zeitlich kontrolliert durchfahren. Es hat sich gezeigt, dass die Erhöhung der Härte der Schweißnähte aufgrund der Martensit- und Bainitbildung, sowie durch Schweißeigenspannungen beim Abkühlen der Schweißnaht bewirkt wird. Für die Martensitbildung ist gemäß der Erfindung der Abkühlbereich zwischen 800°C und 500°C entscheidend. Ist gemäß der Erfindung dieser Temperaturbereich beim Abkühlen der Schweißnaht kontrolliert und über einen längeren Zeitraum, als nach der Abkühlrate vorgegeben, durchfahren, können die Martensit- und Bainitbildung unterdrückt und die Schweißeigenspannungen reduziert und somit eine Erhöhung der Härte der Schweißnaht vermieden werden. Aufgrund der geringeren Härte der Schweißnaht ist das aus den Stahlblechen zusammengeschweißte Blech dann besser umformbar.

Durch die metallische Beschichtung der Schweißnähte im abschließenden Verfahrensschritt werden die Schweißnähte schließlich gegen Korrosion geschützt, so dass mit den erfindungsgemäßen Verfahren ein leicht umformbares und gleichzeitig korrosionsbeständiges Blech herstellbar ist.

Es hat sich gezeigt, dass die Martensit- und Bainitbildung in den Schweißnähten sehr effizient unterdrückt werden kann, wenn gemäß der Erfindung die Temperatur der Schweißnaht beim Abkühlen über einen Zeitraum von 1 bis 3 Sekunden, bevorzugt von 1,5 bis 2 Sekunden, durch den Glühstahl in dem für die Gefügezusammensetzung entscheidenden Temperaturbereich zwischen 800°C und 500°C gehalten wird.

Bevorzugt handelt es sich sowohl bei dem Schweißstrahl als auch bei dem Glühstrahl um einen Laserstrahl, wobei der Schweißstrahl in Form eines stark fokussierten Punktfokus im Bereich der Stoßfuge auf die Oberfläche der zu fügenden Stahlbleche gerichtet wird, während der Glühstrahl als Strichfokus, oder auch in Form eines runden, rechteckigen oder elliptischen Fokus mit gegenüber dem Fokus des Schweißstrahls wesentlich größerer Applikationsfläche auf die Oberfläche der Schweißnaht gerichtet wird. Bevorzugt läuft der Glühstrahl dem Schweißstrahl in Schweißrichtung nach. Es erfolgt dann eine thermische Nachbehandlung der Schweißnaht in kurzem, zeitlichen Abstand nach Ablauf der Schweißzeit. Bevorzugt wird der Durchmesser des Glühstrahl-Fokus so gewählt, dass zumindest die gesamte Breite der Schweißnaht von dem Glühstrahl-Fokus überdeckt wird. Der Durchmesser des Glühstrahl-Fokus kann jedoch auch größer eingestellt werden, um beispielsweise die Wärmeeinflusszone in lateraler Richtung um die Schweißnaht oder sogar Bereiche außerhalb dessen Wärmeeinflusszone zu erfassen. Die Einwirkdauer des Glühstrahls kann entweder über die Schweißgeschwindigkeit oder bei konstanter Schweißgeschwindigkeit über die Länge des Glühstrahl-Fokus eingestellt werden. Bevorzugt wird der Glühstrahl von einem Laserstrahl gebildet, weil dadurch eine große Variation der in die Schweißnaht eingekoppelten thermischen Energie ermöglicht wird. Es können jedoch auch induktive oder konduktive Wärmequellen zur Erzeugung des Glühstrahls verwendet werden, wobei diese jedoch aufgrund ihrer geringeren Energiedichte zur Erzielung gleicher Ergebnisse deutlich mehr Energie benötigen, was sich aufgrund dann hervorgerufener höherer Eigenspannungen und Verzügen bzw. Falten im Bereich der Schweißnaht als nachteilig erweist.

Für die thermische Behandlung der Schweißnaht während des Schweißens wird bevorzugt ein Doppellasersystem eingesetzt, welches den Schweißstrahl in Form eines Schweißlaserstrahls und den Glühstahl in Form eines Glühlaserstrahl bereit stellt. Dadurch kann die thermische Behandlung während des Schweißens direkt an und synchron mit der in Schweißrichtung voranschreitenden Front des Schweißbades erfolgen.

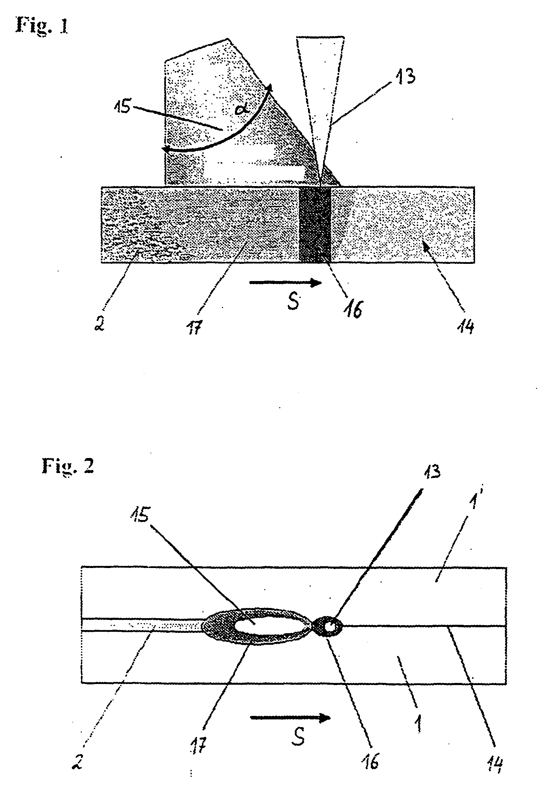

In **Figur 1** ist schematisch eine Stoßfuge 14 zwischen zwei aneinander auf Stoß angelegten Stahlblechen 1, 1' im Längsschnitt dargestellt. Durch Einstrahlen eines Schweißstrahls 13, der als stark fokussierte Punktfokus in die Stoßfuge 14 eingestrahlt wird, wird diese im Stumpfstoßschweißverfahren verschweißt, wobei der Schweißstrahl 13 in Schweißrichtung S mit einer voreinaestellten Schweißgeschwindigkeit voranschreitet. Im Bereich des voranschreitenden Schweißstrahls 13 bildet sich ein Schweißbad 16 in Form von verflüssigtem Stahl aus. In Schweißrichtung S unmittelbar hinter dem Schweißstrahl 13 wird der Glühstrahl 15 auf die Oberfläche der Stahlbleche 1, 1' längs der sich ausbildenden Schweißnaht 2 gerichtet, wobei der Durchmesser des Glühstrahl-Fokus verglichen mit dem Durchmesser des Schweißstrahl-Fokus wesentlich größter ist.

In **Figur 2** ist die Anordnung von Figur 1 in der Draufsicht auf die aneinander gefügten Stahlbleche 1, 1' gezeigt. Die Form des Glühstrahl-Fokus kann - wie aus Figur 2 ersichtlich - die Form eines ovalen bzw. elliptischen Fokus annehmen. Bevorzugt weist der Fokus des Glühstrahls 15 die Form eines Strichfokus auf, wobei die lange Hauptachse des Strichfokus längs der sich ausbildenden Schweißnaht 2 verläuft. Um den Glühstrahl-Fokus bildet sich ein Glühbereich 17 aus. In diesem Glühbereich 17 erfährt die sich durch das Verschweißen der Stoßfuge 14 bildende Schweißnaht 2 eine thermische Nachbehandlung unmittelbar nach Ablauf der Schweißzeit, also während des Abkühlens der Schweißnaht 2. Der Einstrahlwinkel a, unter dem der Glühstrahl 15 auf die Stahlblechoberfläche auftrifft, ist bevorzugt einstellbar. Die Einwirkzeit, die Intensität und der Einstrahlwinkel des Glühstrahls 15 sind gemäß der Erfindung so eingestellt, dass die Schweißnaht 2 beim Abkühlen über einen Zeitraum von 1 bis 3 Sekunden in einem Temperaturbereich von 500°C bis 800°C verbleibt. Der Schweißstrahl 13 trifft bevorzugt - wie in Figur 1 gezeigt - senkrecht auf die Stahlblechoberfläche, er kann jedoch auch schräg eingestrahlt werden.

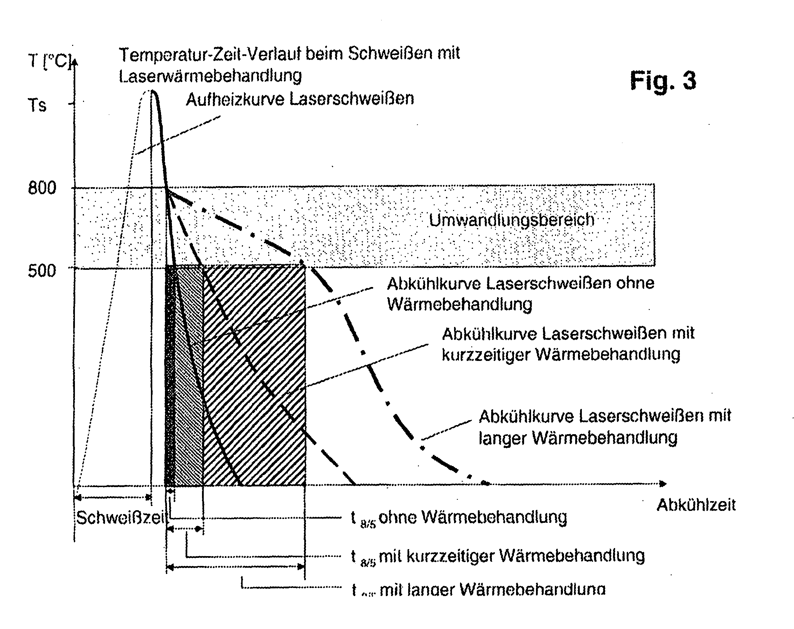

In **Figur 3** ist der zeitliche Verlauf der Temperatur der Schweißnaht 2 an einem bestimmten Ort in der Stoßfuge 14 während und nach dem Schweißen dargestellt. Während der Schweißzeit steigt die Temperatur zunächst stark an, wenn der Schweißstrahl 13 über diesen Ort hinweg läuft. Die Temperatur erreicht dabei Werte oberhalb der Schmelztemperatur T_{S} des Stahlbleches, so dass dieses aufgeschmolzen wird. Nach Durchlaufen des Schweißstrahls 13, also nach Ablauf der Schweißzeit, fällt die Temperatur wieder ab, wobei die Form des Temperatur-Zeit-Verlaufs, der durch die Einwirkung des Schweißstrahls in der Schweißnaht 2 hervorgerufen wird, idealisiert die Form einer Gauss-Kurve aufweist, wie aus Figur 3 ersichtlich. Bereits während und auch noch nach Einwirken des Schweißstrahls erfolgt bei den erfindungsgemäßen Verfahren der Wärmeeintrag in die Schweißnaht 2 durch den Glühstrahl 15, um die Temperatur der Schweißnaht über einen längeren Zeitraum innerhalb des Temperaturbandes zwischen 500°C und 800°C zu halten. Dieses Temperaturband zwischen 500°C und 800°C stellt den Umwandlungsbereich dar, in dem beim Abkühlen der Schweißnaht bei raschem Durchlauf dieses Temperaturbandes entsprechend der natürlichen Abkühlrate eine Martensitbildung erfolgt. Durch Einwirkung des Glühstrahls 15 ist gemäß der Erfindung die Temperatur der Schweißnaht 2 jedoch über einen längeren Zeitraum von 1-3 Sekunden im Temperaturband des Umwandlungsbereichs gehalten. Dies ergibt sich aus dem in Figur 3 dargestellten resultierenden Temperatur-Zeit-Verlauf. Je nach Dauer und Intensität der Einstrahlung des Glühstrahls befindet sich die Temperatur der Schweißnaht über einen kürzeren oder längeren Zeitraum im Umwandlungsbereich. Es hat sich gezeigt, dass die Martensitbildung weitgehend unterdrückt werden kann, wenn die Temperatur der Schweißnaht zumindest in einem Zeitraum von 1,5 bis 2 Sekunden im Umwandlungsbereich gehalten werden kann.

Das oben beschriebene Stumpfstoß-Schweißverfahren mit gleichzeitiger oder nachfolgender thermischer Behandlung der Schweißnaht durch den Glühstrahl wird bei beiden erfindungsgemäßen Verfahren in gleicher Weise angewandt. Bei dem einen erfindungsgemäßen Verfahren werden zunächst zwei unbeschichtete Stahlbleche 1, 1' auf diese Weise miteinander verschweißt und anschließend nach dem Verschweißen vollflächig mit einer metallischen Beschichtung beschichtet, wobei auch die oder jede Schweißnaht 2 mit der metallischen Beschichtung überzogen wird. Die vollflächige Beschichtung der gefügten Stahlbleche 1, 1' erfolgt hierbei in bekannter Weise, beispielsweise durch galvanische Verzinnung oder Verchromung in einer an sich bekannten Bandverzinnungs- bzw. Bandverchromungsanlage.

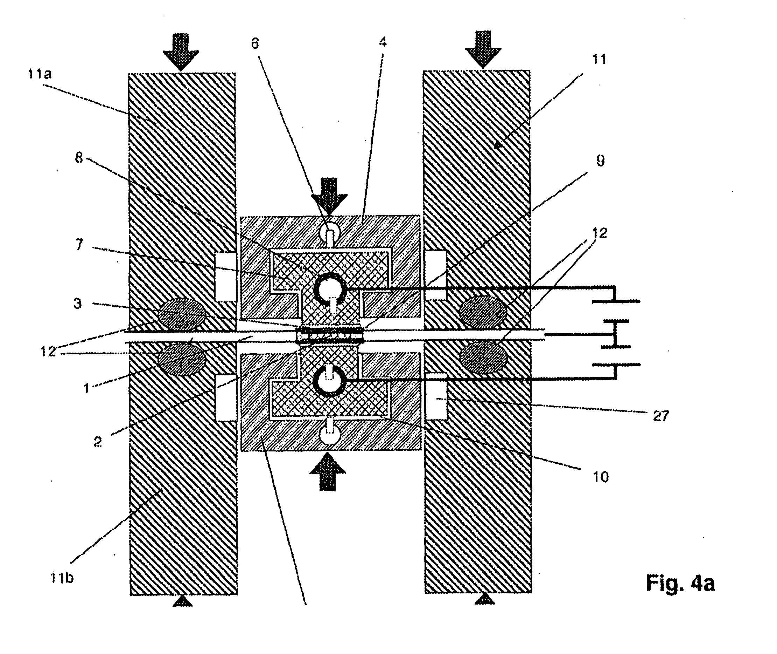

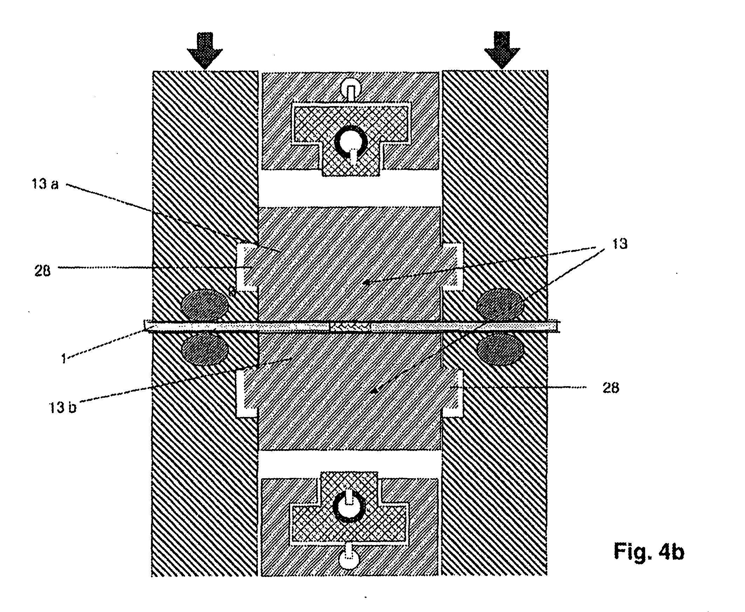

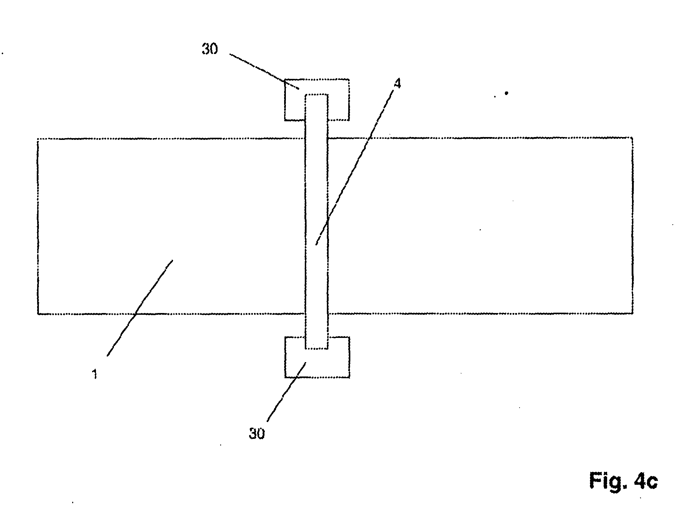

Bei dem zweiten erfindungsgemäßen Verfahren werden bereits mit einer metallischen Beschichtung überzogene Stahlbleche 1, 1' mit dem oben beschriebenen Stumpfstoßschweißverfahren miteinander verschweißt und während oder nach dem Schweißen mittels des Glühstrahls 15 thermisch behandelt. Nach Abkühlen der Schweißnähte werden diese streifenförmig durch elektrolytische Galvanisierung mit einer metallischen Beschichtung versehen. In **Figur 4** ist eine im erfindungsgemäßen Verfahren verwendbare Vorrichtung zum beidseitigen Aufbringen der metallischen Beschichtung auf die Schweißnaht 2 dargestellt, wobei Figur 4a die Vorrichtung im Prozessschritt während der elektrolytischen Galvanisierung der Schweißnaht und Figur 4b dieselbe Vorrichtung während der Durchführung eines Reinigunsschritts zur Reinigung der galvanisierten Schweißnaht zeigt..

Die in **Figur 4** gezeigte Vorrichtung umfasst zwei in vertikaler Richtung geführte und senkrecht zur Oberfläche der Stahlbleche 1, 1' verfahrbare Anodenleisten 4, 5. Die beiden Anodenleisten 4, 5 sind auf gegenüberliegenden Seiten der Stahlbleche 1, 1' zueinander fluchtend angeordnet und bevorzugt gegeneinander schwimmend gelagert. Die Vorrichtung umfasst weiterhin eine Zufuhreinrichtung zur Zuführung eines flüssigen Elektrolyten, der zur elektrolytischen Galvanisierung der Schweißnaht 2 verwendet wird. Die Zufuhreinrichtung ist an ein Elektrolyt-Reservoir gekoppelt. Weiterhin umfasst die Vorrichtung eine Auftragseinrichtung zum Aufbringen des Elektrolyten auf die Schweißnaht 2, sowie eine Anode 8, an die eine elektrische Potentialdifferenz gegenüber den Stahlblechen 1, 1' angelegt werden kann. Zum Einspannen und Fixieren der Stahlbleche 1, 1' ist eine Einspanneimichtung 11 vorgesehen, mit der die Stahlbleche 1, 1' so positioniert und fixiert werden, dass die beiden Anodenleisten 4, 5 auf der Ober- bzw. Unterseite der Stahlbleche 1, 1' parallel zu diesen verlaufend angeordnet sind und längs der Stoßfuge 14 verlaufen.

Die Länge der beiden Anodenleisten 4, 5 entspricht mindestens der maximalen Breite des zu behandelnden Stahlbleches 1 (entsprechend der maximalen Länge der zu behandelnden Schweißnaht 2). In **Figur 4c** ist die obere Anodenleiste 4 der beiden in Figur 4a gezeigten Anodenleisten in einer Draufsicht gezeigt mit dem darunter angeordneten Stahlblech 1 und zwei vertikalen Führungen 30, in denen die Anodenleiste 4 geführt ist. Die Anodenleisten 4, 5 sind aus einem korrosionsstabilen Material hergestellt, beispielsweise aus Metall, insbesondere säurebeständigem Edelstahl, oder aus nichtmetallischen Werkstoffen, wie z.B. Keramik. Zweckmäßig sind die Anodenleisten 4, 5 aus einem elektrisch isolierenden Material hergestellt, da dann eine Schutzeinrichtung gegen elektrische Aufladung der Anodenleisten 4, 5 entfallen kann. Die Anodenleisten 4, 5 weisen bevorzugt die aus den Schnittdarstellungen der Figur 4a ersichtliche Hohlprofilform auf.

Innerhalb der hohlprofilförmigen Anodenleisten 4, 5 ist die Auftragseinrichtung zum Aufbringen des Elektrolyten auf die Schweißnaht 2 3' angeordnet, wobei diese Auftragseinrichtung bei dem in Figur 4a dargestellten Beispiel durch einen Tampon 7 aus einem elektrisch nicht leitenden, offenporigen Material gebildet ist. Bei dem Tampon 7 kann es sich beispielsweise um einen offenporigen Schaumstoff oder um ein Filz- oder Vliesmaterial handeln. Der Tampon 7 ragt aus einer längs jeder Anodenleiste 4, 5 verlaufenden Öffnung hervor und steht gegenüber den den Stahlblechen 1, 1' zugewandten Unterkanten der Anodenleisten 4, 5 geringfügig hervor. Innerhalb des Hohlprofils jeder Anodenleiste 4, 5 steht der Tampon 7 mit einer Rohrleitung 6 in Verbindung. In der Rohrleitung 6 sind Austrittsöffnungen eingebracht, durch welche die in der Rohrleitung 6 fließende Elektrolyt-Flüssigkeit in den Tampon 7 fließen und von diesem aufgesaugt werden kann. Innerhalb jeder Anodenleiste 4, 5 ist weiterhin eine Anode 8 angeordnet. Bei dem in Figur 4a gezeigten Beispiel ist die Anode 8 durch ein elektrisch leitfähiges Rohr, bevorzugt ein Metallrohr, gebildet, welches innerhalb jeder Anodenleiste 4, 5 in Längsrichtung verläuft.

Zur elektrolytischen Galvanisierung einer Schweißnaht 2 werden die durch das vorbeschriebene Stumpfstoß-Schweißverfahren aneinander gefügten Stahlbleche 1, 1' in die Behandlungsvorrichtung eingeführt und dort so positioniert, dass die Schweißnaht 2 parallel zu den beiden Anodenleisten 4, 5 verläuft. Zur Positionierung und Fixierung der Stahlbleche 1, 1' in dieser Stellung umfasst die Behandlungsvorrichtung eine Einspanneinrichtung 11. Diese Einspanneinrichtung 11 ist bei dem in Figur 4a dargestellten Beispiel durch zwei Spannbackenpaare 11a und 11b gebildet, welche auf der Ober- bzw. Unterseite der Stahlbleche 1, 1' angeordnet sind. Die Spannbacken sind wie die Anodenleisten 4, 5 senkrecht zur Oberfläche der Stahlbleche 1, 1' verfahrbar und weisen an ihrer den Stahlblechen 1, 1' zugewandten Unterkante jeweils eine Dichtung 12 auf. Zur Positionierung und Fixierung der Stahlbleche 1, 1' werden diese zwischen den Spannbackenpaaren 11a, 11b eingeklemmt, wobei die Dichtung 12 beim Aufsetzen eine mechanische Verletzung der Stahlblechoberflächen vermeidet und darüber hinaus den Prozessraum im Bereich um die Schweißnaht 2 flüssigkeitsdicht abdichtet. Beim Einspannen der Stahlbleche 1, 1' in die Einspanneinrichtung 11 wird die Stahlblechoberfläche, die in Folge von Eigenspannungen eine Welligkeit quer zur Schweiß- und Walzrichtung aufweist, geglättet.

Nach (oder auch vor) dem Positionieren und Einspannen des Stahlblechs in die Einspanneinrichtung 11 werden die beiden Anodenleisten 4, 5 zu beiden Seiten der Stahlbleche 1, 1' auf diese im Bereich der Schweißnaht 2 aufgesetzt, indem die Anodenleisten 4, 5 in ihrer jeweiligen Führung 30 verlaufend in Richtung senkrecht zur Oberfläche der Stahlbleche 1, 1' bewegt werden. Dabei wird der Tampon 7 mit einem vorgegebenen Druck auf die Schweißnaht 2 gepresst. Anschließend wird eine elektrische Spannung zwischen der Anode 8 und den Stahlblechen 1, 1' angelegt und gleichzeitig wird eine Elektrolyt-Flüssigkeit durch die Zufuhreinrichtung zur Auftragseinrichtung geleitet, wodurch der Tampon 7 mit Elektrolyt-Flüssigkeit getränkt wird. Der sich auf der Oberfläche der Stahlbleche 1, 1' bildende Elektrolyt-Film ist in Figur 4a mit Bezugsziffer 3 gekennzeichnet. In Folge der zwischen den Stahlblechen 1, 1' (bzw. der Schweißnaht 2) und der Anode 8 angelegten Spannung wandern die im Elektrolyten vorliegenden Kationen zum kathodisch geschalteten Stahlblech und insbesondere zur Schweißnaht 2. Durch Aufnahme von Elektronen werden die Elektrolyt-Kationen an der Blech- bzw. der Schweißnahtobeifläche als festes Metall abgeschieden. Die Schichtdicke des auf der Schweißnaht 2 abgeschiedenen Metallüberzugs wird bei konstanten elektrischen Kennwerten und stabilen Kation-Konzentrationen im Elektrolyten, der eine vorgegebene elektrische Leitfähigkeit aufweist, ausschließlich durch die Prozesszeit bestimmt, welche über einen Zeitschalter voreingestellt werden kann.

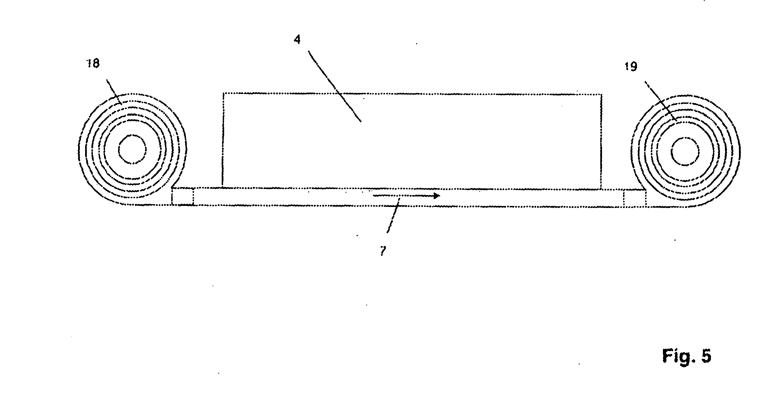

Zur Gewährleistung gleich bleibender Prozessparameter für jeden Galvanisierungsprozess einer Schweißnaht 2 muss der Tampon 7 in regelmäßigen zeitlichen Abständen erneuert bzw. regeneriert werden, da die offenporige Struktur des Tampons 7 sich insbesondere durch Aussalzungen zusetzen kann und deshalb ein geregelter Fluss des Elektrolyten auf die Stahlblechoberfläche lokal unterbunden werden kann. Der Austausch bzw. die Regeneration des Tampons 7 kann durch Austausch der Anodenleisten 4, 5 erfolgen. Alternativ hierzu kann eine automatisierte Tampon-Wechseleinheit verwendet werden, wie sie in **Figur 5** schematisch dargestellt ist. Diese Tampon-Wechseleinheit umfasst eine Speicherrolle 18, auf der Tamponmaterial aufgewickelt ist. Diese Speicherrolle 18 wird neben jeder Anodenleiste 4, 5 angeordnet. Per manueller Auslösung oder automatisch per voreingestellter Zeitsteuerung wird bei verbrauchtem Tampon 7 frisches Tamponmaterial von der Speicherrolle 18 abgezogen und in die Tampon-Aufnahme jeder Anodenleiste 4, 5 gezogen, während gleichzeitig der verbrauchte Bereich des Tampons 7 auf eine Aufwickelrolle 19 aufgewickelt wird. Eine Aufwickelrolle 19 ist neben jeder Anodenleiste 4, 5 auf der der Speicherrolle 18 gegenüberliegenden Seite angeordnet.

Sobald eine genügend dicke Metallschicht galvanisch auf der Schweißnaht abgeschieden worden ist, wird die elektrische Spannung zwischen den Stahlblechen 1, 1' und der Anode 8 abgeschaltet und die Elektrolytzufuhr abgestellt. Die auf der Stahlblechoberfläche verbleibende Elektrolyt-Flüssigkeit wird in einem Kreislauf gehalten, um Aussalzungen zu vermeiden und die Anodenleisten 4, 5 werden nach Abstellen der elektrischen Spannung und der Elektrolytzufuhr von der Blechoberfläche weg in ihre Ausgangsposition gefahren, die in **Figur 4b** dargestellt ist..

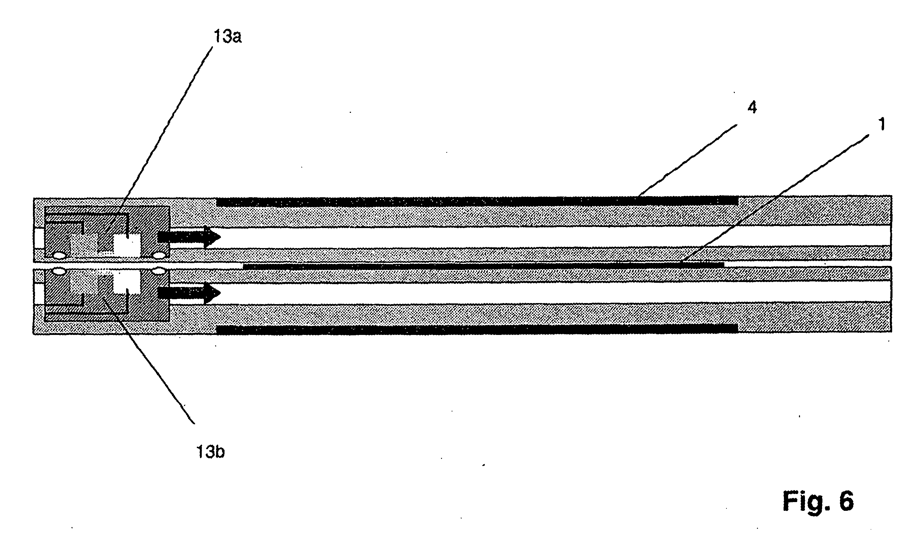

Anschließend erfolgt eine Reinigung der Stahlblechoberfläche durch Entfernung der auf der Stahlblechoberfläche verbliebenen Elektrolytreste. Hierzu verfügt die Vorrichtung über eine Reinigungseinrichtung 13 mit in horizontaler Richtung parallel zur Stahlblechoberfläche verfahrbaren Reinigungsschlitten 13a, 13b, wobei der Ober- und der Unterseite des Stahlblechs jeweils ein Reinigunasschlitten 13a bzw. 13b zugeordnet ist. In **Figur 6** sind die Verfahrwege der Reinigungsschlitten 13a, 13b schematisch dargestellt. Die Reinigungsschlitten 13a, 13b werden in Führungen in den Spannbacken 11 geführt. Die Führungen sind in Form von Nuten 27 ausgebildet, in denen Führungsstege 28 der Reinigungsschlittens 13 eingreifen, wie in der Schnittdarstellung der **Figur 4b** gezeigt.

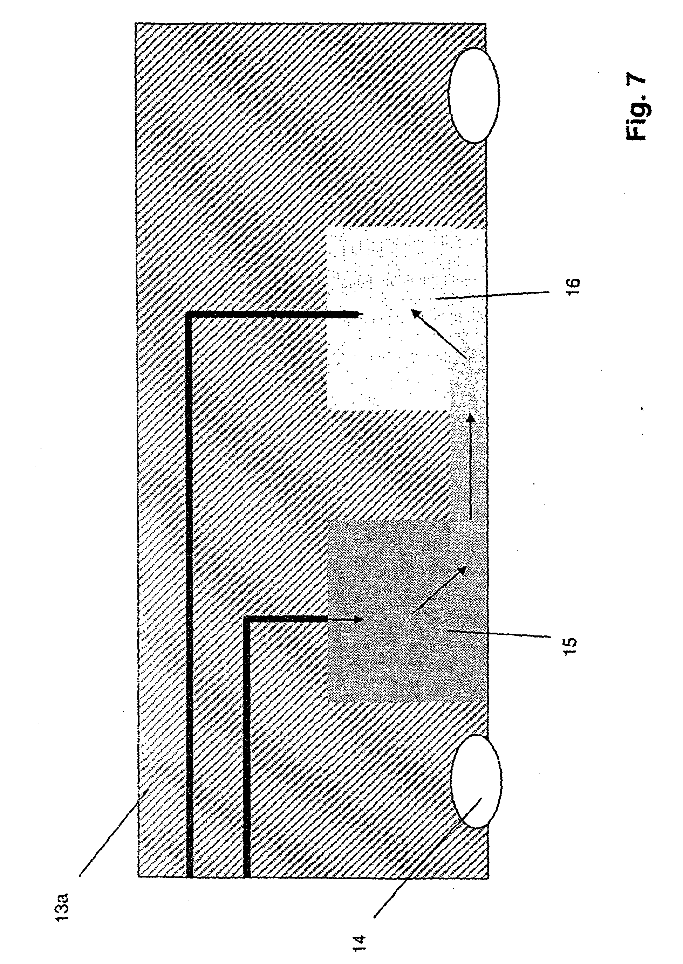

In **Figur 7** ist ein Reinigungsschlitten 13a im Querschnitt dargestellt. Jeder Reinigungsschlitten 13a, 13b trägt eine mit hohem Druck arbeitende Aufspritzdüse 15, durch die Wasser auf die Stahlblechoberfläche 1 gespritzt werden kann. Jeder Reinigungsschlitten 13a, 13b verfügt weiterhin über eine mit Unterdruck arbeitende Absaugvorrichtung 16. An der Unterseite jedes Reinigungsschlittens 13 sind Dichtungen 14 angeordnet, die auf der Stahlblechoberfläche aufliegen und so eine Beschädigung der Oberfläche verhindern und gleichzeitig den Prozessraum um die Schweißnaht 2 flüssigkeitsdicht abschließen. Durch den flüssigkeitsdichten Abschluss wird verhindert, dass Spülwasser nach außen dringen kann und dass Fremdluft von außen angesaugt werden kann.

Zur Durchführung des Reinigungsschritts wird jeder Reinigungsschlitten 13a, 13b von seiner in **Figur 6** gezeigten Ausgangsstellung horizontal und längs der Schweißnaht 2 über die Stahlblechoberfläche gefahren. Zur Reinigung der Stahlblechoberfläche wird Wasser durch die Düse 15 auf die Stahlblechoberfläche gespritzt und gleichzeitig die sich dadurch bildende Wasser-Elektrolyt-Mischung durch die Absaugvorrichtung 16 abgesaugt. Falls erforderlich, kann der Reinigungsprozess mehrmals wiederholt werden. Die Anzahl der erforderlichen Reinigungsdurchläufe kann durch eine Steuerung voreingestellt werden. Nach Durchlauf des letzten Reinigungsganges wird jeder Reinigungsschlitten 13a, 13b in seine Ausgangsposition zurückgefahren.

Bei den in Figur 4a gezeigten Beispiel der Beschichtungsvorrichtung erfolgt die Zuführung der Elektrolyt-Flüssigkeit durch die Rohrleitung 6. In einem alternativen Beispiel kann die Elektrolyt-Flüssigkeit auch durch eine rohrförmige Anode 8 zugeführt werden, wobei die rohrförmige Anode 8 dann gleichfalls über Austrittsöffnungen verfügt, über welche die Elektrolyt-Flüssigkeit in den die Anode 8 umgebenden Tampon 7 eindringen kann. Das Anodenrohr 8 ist bei diesem Beispiel bevorzugt aus einem säurebeständigen, elektrisch leitenden Material, beispielsweise aus Edelstahl, hergestellt.

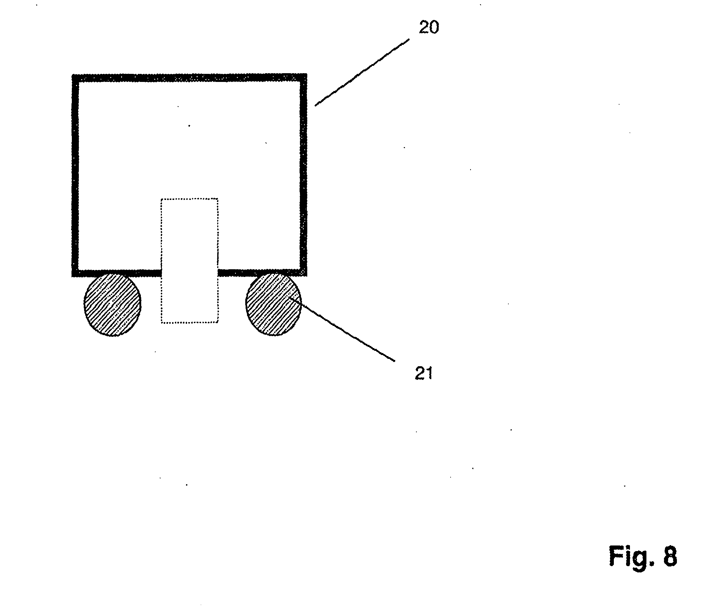

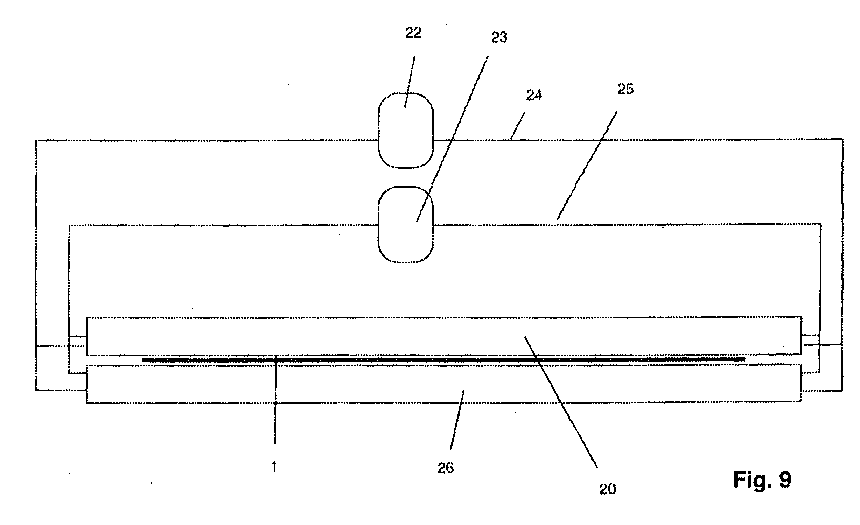

In einem weiteren Beispiel, welches in den **Figuren 8** **und** **9** dargestellt ist, ist die Anode 8 als geschlitztes Rechteckrohr 20 ausgebildet (Figur 8), an dessen Unterseite Dichtleisten 21 angeordnet sind. Das Rechteckrohr 20 dient als Anode 8 und wird hierzu gegenüber dem Stahlblech 1 unter einer elektrischen Spannung gesetzt und dient gleichzeitig als Zufuhreinrichtung zur Zuführung der Elektrolytflüssigkeit und als Auftragseinrichtung zum Aufbringen des Elektrolyten auf die Schweißnaht. Ein solches Rechteckrohr 20 ist auf der Oberseite des Stahlblechs längs der Schweißnaht 2 verlaufend angeordnet und auf der Unterseite ist ein baugleiches Rechteckrohr 26 angeordnet, wie in Figur 9 gezeigt.

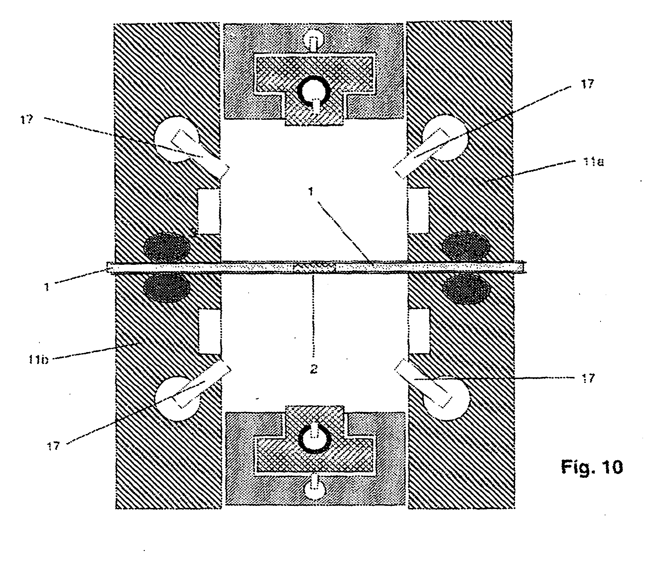

Beide Rechteckrohre 20, 26 sind an ein Reservoir 22 einer Elektrolyt-Flüssigkeit angeschlossen (Figur 9). Die Elektrolyt-Flüssigkeit wird über eine Pumpe in das Rechteckrohr 20 gepumpt und über Spritzdüsen auf die Stahlblechoberfläche im Bereich der Schweißnaht 2 aufgespritzt. Der durch die Dichtungen 21 abgedichtete Prozessraum um die Schweißnaht 2 wird dadurch mit Elektrolytflüssigkeit geflutet Überschüssige Elektrolyt-Flüssigkeit kann während des Prozesses durch eine Ansaugeinrichtung von der Oberfläche des Stahlblechs 1 abgesaugt und zur Wiederverwertung dem Reservoir 22 zugeführt werden. Wie bei dem vorbeschriebenen Beispiel erfolgt nach Beendigung der elektrolytischen Galvanisierung der Schweißnaht 2 eine Reinigung der Stahlblechoberfläche durch Wasserspülung und Absaugen der Elektrolyt-Wasser-Lösung. Hierzu ist bei diesem Beispiel jedes Rechteckrohr 20, 26 mit einem Wasserkreislauf 25 verbunden (Figur 9). Nach dem Reinigungsdurchlauf erfolgt vorzugsweise eine Trocknung der Stahlblechobeifläche, insbesondere im Bereich der elektrolytisch galvanisierten Schweißnaht 2. Der Trocknungsvorgang kann mit Druckluft oder Heißluft durchgeführt werden. Hierfür sind Luftdüsen 17 in den Spannbacken 11a, 11b vorgesehen, die in der **Figur 10** dargestellt sind. Mit diesen Luftdüsen 17 kann Trocknungsluft unter einstellbaren Winkeln auf das Stahlblech 1 geblasen werden. Der Trocknungsgrad wird über die Trocknungszeit gesteuert, die mittels einer Steuerung einstellbar ist.

Mit der beschriebenen Vorrichtung können die Schweißnähte 2 streifenförmig mit einem metallischen Überzug versehen werden, um die Schweißnähte 2 gegen Korrosion zu schützen. Aufgrund der thermischen Behandlung der Schweißnähte während oder nach dem Schweißen sind die gefügten Stahlbleche 1, 1' auch im Bereich der Schweißnähte 2 gut umformbar und gleichzeitig gegen Korrosion geschützt.

## Patentansprüche

1. Verfahren zur Herstellung eines korrosionsbeständigen und umformbaren Blechs aus unbeschichteten Stahlblechen (1, 1') mit folgenden Schritten:
a) Anlegen der Stahlbleche (1, 1') auf Stoß,
b) Verschweißen der oder jeder Stoßfuge (14) durch Stumpfstoßschweißen mittels eines Schweißstrahls (13) zur Ausbildung einer Schweißnaht (2) längs der jeweiligen Stoßfuge (4),
c) Vollflächiges Beschichten der gefügten Stahlbleche (1, 1'), einschließlich der oder jeder Schweißnaht (2), nach Abkühlen der Schweißnähte (2) mit einer metallischen Beschichtung, **dadurch gekennzeichnet, dass** zwischen den Schritten b) und c) der folgende Schritt erzeugt wird:
d) Thermische Behandlung der oder jeder Schweißnaht (2) unmittelbar nach oder bereits während der Bildung der Schweißnaht (2) mittels eines Glühstrahls (15), wobei die Einwirkzeit und die Intensität des Glühstrahls (15) so eingestellt sind, dass die Temperatur der Schweißnaht (2) beim Abkühlen nach dem Schweißen durch den Glühstrahl (15) über einen Zeitraum von 1 bis 3 Sekunden in einem Temperaturbereich zwischen 800°C und 500°C gehalten wird, um die Martensitbildung im Bereich der Schweißnaht (2) zu unterbinden,

2. Verfahren zur Herstellung eines korrosionsbeständigen und umformbaren Blechs aus mit einer metallischen Beschichtung überzogenen Stahlblechen (1, 1') mit folgenden Schritten:
a) Anlegen der beschichteten Stahlbleche (1, 1') auf Stoß,
b) Verschweißen der oder jeder Stoßfuge (14) durch Stumpfstoßschweißen mittels eines Schweißstrahls (13) zur Ausbildung einer Schweißnaht (2) längs der jeweiligen Stoßfuge (14),
c) Aufbringen einer streifenförmigen metallischen Beschichtung auf jede Schweißnaht (2) nach Abkühlen der Schweißnaht (2), **dadurch gekennzeichnet, dass** zwischen den Schritten b) und c) der folgende Schritt erzeugt wird:
d) Thermische Behandlung der oder jeder Schweißnaht (2) unmittelbar nach oder bereits während der Bildung der Schweißnaht (2) mittels eines Glühstrahls (15), wobei die Einwirkzeit und die Intensität des Glühstrahls (15) so eingestellt sind, dass die Temperatur der Schweißnaht (2) beim Abkühlen nach dem Schweißen durch den Glühstrahl (15) über einen Zeitraum von 1 bis 3 Sekunden in einem Temperaturbereich zwischen 800°C und 500°C gehalten wird, um die Martensitbildung im Bereich der Schweißnaht (2) zu unterbinden,

3. Verfahren nach Anspruch 1, **dadurch gekennzeichnet, dass** die Beschichtung der Stahlbleche (1, 1') durch Galvanisierung, insbesondere durch galvanische Verzinnung, Verzinkung oder galvanische Verchromung, erfolgt.

4. Verfahren nach Anspruch 1 oder 2, **dadurch gekennzeichnet, dass** der Glühstrahl (15) dem Schweißstrahl (13) in Schweißrichtung (S) nachläuft.

5. Verfahren nach einem der voranstehenden Ansprüche, **dadurch gekennzeichnet, dass** der Glühstrahl (15) als Strichfokus auf die Schweißnaht (2) auftrifft.

6. Verfahren nach einem der voranstehenden Ansprüche, **dadurch gekennzeichnet, dass** die Temperatur der Schweißnaht (2) beim Abkühlen nach dem Schweißen über einen Zeitraum von 1,5 bis 2 Sekunden durch den Glühstrahl (15) in einem Temperaturbereich zwischen 800°C und 500°C gehalten wird.

7. Verfahren nach Anspruch 2, **dadurch gekennzeichnet, dass** die Beschichtung der Schweißnaht (2) durch elektrolytische Galvanisierung der Schweißnaht (2) erfolgt,

8. Verfahren nach Anspruch 7, **dadurch gekennzeichnet, dass** zur elektrolytischen Galvanisierung der Schweißnaht (2) an die Stahlbleche (1, 1') gegenüber einer entlang der Schweißnaht (2) im Abstand zu dieser verlaufenden Anode (8) eine elektrische Spannung angelegt und gleichzeitig auf die Schweißnaht (2) ein Elektrolyt aufgebracht wird.

9. Verfahren nach Anspruch 7, **dadurch gekennzeichnet, dass** es sich bei den beschichteten Stahlblechen (1, 1') um Weißbleche oder spezialverchromte Stahlbleche handelt und dass der Elektrolyt gelöste Zinnkationen oder Chromkationen enthält.

10. Verfahren nach Anspruch 8 oder 9, **dadurch gekennzeichnet, dass** der Elektrolyt eine elektrische Leitfähigkeit von 50 - 500 mS/cm aufweist.

11. Verfahren nach einem der Ansprüche 8 bis 10, **dadurch gekennzeichnet, dass** der Elektrolyt über einen an der Schweißnaht (2) anliegenden Tampon (7) aus einem elektrisch nicht leitenden, offenporigen Material auf die Schweißnaht (2) aufgetragen wird.

12. Verfahren nach Anspruch 11, **dadurch gekennzeichnet, dass** der Tampon (7) unter vorgegebenem Druck an der Oberfläche der Schweißnaht (2) anliegt und diese vollständig überdeckt.

13. Verfahren nach einem der Ansprüche 8 bis 12, **dadurch gekennzeichnet, dass** der Elektrolyt über ein mit wenigstens einer Spritzöffnung oder -düse versehenes Rohr (20) auf die Schweißnaht (2) aufgespritzt wird.

14. Verfahren nach einem der Ansprüche 7 bis 13, **dadurch gekennzeichnet, dass** die Stahlbleche (1, 1') während der elektrolytischen Galvanisierung der Schweißnaht (2) im Bereich um die Schweißnaht (2) mittels Spannelemente (11) möglichst plan in einer Ebene gehalten werden.

15. Verfahren nach einem der Ansprüche 8 bis 14, **dadurch gekennzeichnet, dass** die Stahlbleche (1, 1') nach der elektrolytischen Galvanisierung der Schweißnaht (2) zumindest im Bereich um die Schweißnaht (2) von auf der Oberfläche verbliebenen Elektrolytresten gereinigt werden.

16. Verfahren nach einem der voranstehenden Ansprüche, **dadurch gekennzeichnet, dass** die Abkühlzeit der Schweißnaht (2) durch den Glühstrahl (15) derart verlängert wird, dass die Abkühlgeschwindigkeit, mit der sich die Schweißnaht(2) abkühlt, unter der Abkühlgeschwindigkeit gehalten wird, bei der ohne Einwirkung des Glühstrahls (15) eine Martensitbildung im Bereich der Schweißnaht erfolgen würde.

## Claims

1. Method for producing a corrosion-resistant and workable sheet from uncoated steel sheets (1, 1') with the following steps:
a) butting the steel sheets (1, 1') together,
b) welding the or each butt joint (14) by butt joint welding by means of a welding beam (13) to form a weld seam (2) along the respective butt joint (4),
c) full-surface coating of the joined steel sheets (1, 1'), including the or each weld seam (2), after the cooling of the weld seams (2) with a metal coating, **characterised in that** between the steps (b) and (c) the following step is produced:
d) heat treatment of the or each weld seam (2) immediately after or during the formation of the weld seam (2) by means of an annealing beam (15), the acting time and the intensity and/or the angle of incidence of the annealing beam (15) being set so that the temperature of the weld seam (2) during the cooling after the welding is kept in a temperature range of between 800°C and 500°C over a period of 1 to 3 seconds by the annealing beam (15) in order to suppress the martensite formation in the area of the weld seam (2).

2. Method for producing a corrosion resistant and workable sheet from steel sheets (1, 1') coated with a metallic coating with the following steps:
a) butting the coated steel sheets (1, 1') together,
b) welding the or each butt joint (14) by butt joint welding by means of a welding beam (13) to form a weld seam (2) along the respective butt joint (14),
c) applying a strip-shaped metal coating to each weld seam (2) after the cooling of the weld seam (2), **characterised in that** between the steps b) and c) the following step is produced:
d) heat treatment of the or each weld seam (2) directly after or during the formation of the weld seam (2) by means of an annealing beam (15), the acting time and the intensity and/or the angle of incidence of the annealing beam (15) being set so that the temperature of the weld seam (2) during the cooling after the welding is kept in a temperature range of between 800°C and 500°C over a period of 1 to 3 seconds by the annealing beam (15) in order to suppress the martensite formation in the area of the weld seam (2).

3. Method according to claim 1, **characterised in that** the coating of the steel sheets (1, 1') is carried out by galvanisation, in particular by galvanic tinning, zinc-coating or galvanic chroming.

4. Method according to claim 1 or 2, **characterised in that** the annealing beam (15) tracks the welding beam (13) in the welding direction (S).

5. Method according to one of the preceding claims, **characterised in that** the annealing beam (15) impinges on the weld seam (2) in the form of a line focus.

6. Method according to one of the preceding claims, **characterised in that** the temperature of the weld seam (2) during the cooling after the welding is kept in a temperature range of between 800°C and 500°C over a period of 1.5 to 2 seconds by the annealing beam (15).

7. Method according to claim 2, **characterised in that** the coating of the weld seam (2) is carried out by electrolytic galvanisation of the weld seam (2).

8. Method according to claim 7, **characterised in that** for the electrolytic galvanisation of the weld seam (2), an electrical voltage is applied to the steel sheets (1, 1') opposite an anode (8) running along the weld seam (2) a distance from the latter and at the same time an electrolyte is applied to the weld seam (2).

9. Method according to claim 7, **characterised in that** the coated steel sheets (1, 1') are tin plates or specially chromed steel sheets and **in that** the electrolyte contains dissolved tin cations or chrome cations.

10. Method according to claim 8 or 9, **characterised in that** the electrolyte exhibits an electrical conductivity of 50 - 500 mS/cm.

11. Method according to one of claims 8 to 10, **characterised in that** the electrolyte is applied to the weld seam (2) by means of a pad (7) made of an electrically non-conducting open-pored material bearing on the weld seam (2).

12. Method according to claim 11, **characterised in that** the pad (7) bears on the surface of the weld seam (2) with a predetermined pressure and covers this completely.

13. Method according to one of claims 8 to 12, **characterised in that** the electrolyte is sprayed onto the weld seam (2) by means of a pipe (20) provided with at least one spraying opening or nozzle.

14. Method according to one of claims 7 to 13, **characterised in that** during the electrolytic galvanisation of the weld seam (2) the steel sheets (1, 1') are held as flat as possible in one plane in the area around the weld seam (2) by means of clamping elements (11).

15. Method according to one of claims 8 to 14, **characterised in that** after the electrolytic galvanisation of the weld seam (2) the steel sheets (1, 1') are cleaned to remove electrolyte residues remaining on the surface, at least in the area around the weld seam (2).

16. Method according to one of the preceding claims, **characterised in that** the cooling time of the weld seam (2) is extended by the annealing beam (15) so that the cooling speed at which the weld seam (2) cools is kept below the cooling speed at which martensite formation would take place in the area of the weld seam without the action of the annealing beam (15).

## Revendications

1. Procédé de fabrication d'une tôle résistante à la corrosion et façonnable en tôle d'acier non recouverte (1, 1') selon les étapes suivantes :
a) Pose des tôles d'acier (1, 1') bout à bout,
b) Souder la ou les jointures (14) par soudure d'aboutement à l'aide d'un faisceau de soudure (13) servant à former une soudure (2) le long de chaque jointure (4),
c) Une fois les soudures (2) refroidies, recouvrement complet des tôles d'acier abouties (1, 1'), y compris la ou les soudures (2), avec une enduction métallique, **caractérisé en ce qu'**entre les étapes b) et c), l'étape suivante est réalisée :
d) Traitement thermique de ou des soudures (2) directement après ou déjà pendant la réalisation de la soudure (2) à l'aide d'un faisceau incandescent (15), sachant que le temps d'action et l'intensité et/ou l'angle d'arrivée du faisceau incandescent (15) sont réglés de telle sorte que la température de la soudure (2) lorsqu'elle refroidie une fois la soudure effectuée, est maintenue pendant 1 à 3 secondes entre 800°C et 500°C par l'effet du faisceau incandescent (15) afin d'empêcher la formation de martensite au niveau de la soudure (2),

2. Procédé de fabrication d'une tôle résistante à la corrosion et façonnable en tôle d'acier (1, 1') recouverte d'une couche métallique selon les étapes suivantes :
a) Pose des tôles d'acier recouvertes (1, 1') bout à bout
b) Souder chaque jointure (14) par soudure d'aboutement à l'aide d'un faisceau de soudure (13) servant à former une soudure (2) le long de chaque jointure (14),
c) Une fois la soudure (2) refroidie, application d'une couche métallique en bande sur chaque soudure (2), **caractérisé en ce qu'**entre les étapes b) et c) l'étape suivante est réalisée :
d) Traitement thermique de la ou des soudures (2) directement après ou déjà pendant la réalisation de la soudure (2) à l'aide d'un faisceau incandescent (15), sachant que le temps d'action et l'intensité et/ou l'angle d'arrivée du faisceau incandescent (15) sont réglés de telle sorte que la température de la soudure (2) lorsqu'elle refroidie une fois la soudure effectuée, est maintenue pendant 1 à 3 secondes entre 800°C et 500°C par l'effet du faisceau incandescent (15) afin d'empêcher la formation de martensite au niveau de la soudure (2),

3. Procédé selon la revendication 1, **caractérisé en ce que** le recouvrement des tôles d'acier (1, 1') se fait par galvanisation, en particulier par étamage galvanisé, zingage ou chromage galvanisé.

4. Procédé selon la revendication 1 ou 2, **caractérisé en ce que** le faisceau incandescent (15) suit la soudure (2) dans le sens de la soudure (S),

5. Procédé selon l'une des revendications précédentes, **caractérisé en ce que** le faisceau incandescent (15) forme un foyer filiforme sur la soudure (2),

6. Procédé selon l'une des revendications précédentes, **caractérisé en ce qu'**après la soudure, la température de la soudure (2) est maintenue à une température située entre 800°C et 500°C pendant 1,5 à 2 secondes après la soudure, par le faisceau incandescent (15),

7. Procédé selon la revendication 2, **caractérisé en ce que** le recouvrement de la soudure (2) se fait par galvanisation électrolytique de la soudure (2),

8. Procédé selon la revendication 7, **caractérisé en ce que** pour effectuer la galvanisation électrolytique de la soudure (2) sur les tôles d'acier (1, 1') par rapport à une anode s'étirant à distance le long de la soudure (2), une tension électrique est exercée et simultanément, une électrolyte est appliquée sur la soudure (2),

9. Procédé selon la revendication 7, **caractérisé en ce que** les tôles d'acier recouvertes (1, 1') sont des tôles blanches ou des tôles d'acier spécialement chromées et **en ce que** l'électrolyte contient des cations d'étain ou des cations de chrome,

10. Procédé selon la revendication 8 ou 9, **caractérisé en ce que** l'électrolyte présente une capacité de conduction électrique de 50 - 500 mS/cm.

11. Procédé selon l'une des revendications 8 à 10, **caractérisé en ce que** l'électrolyte est appliquée sur la soudure (2) par le biais d'un tampon (7) en matériau à pores ouverts non conducteur d'électricité posé sur la soudure (2),

12. Procédé selon la revendication 11, **caractérisé en ce que** le tampon (7) est posé sur la surface de la soudure (2) selon une pression définie et qu'il recouvre entièrement cette dernière.

13. Procédé selon l'une des revendications 8 à 10, **caractérisé en ce que** l'électrolyte est projetée sur la soudure (2) par un tuyau (20) pourvu d'au moins une ouverture ou une tuyère à pulvériser,

14. Procédé selon l'une des revendications 7 à 13, **caractérisé en ce que** pendant la galvanisation électrolytique de la soudure (2) les tôles d'acier (1, 1') sont maintenues dans une position aussi plane que possible à l'aide d'éléments de serrage (11) autour de la soudure (2),

15. Procédé selon l'une des revendications 8 à 14, **caractérisé en ce que** après la galvanisation électrolytique de la soudure (2), les restes d'électrolyte sur la surface des tôles d'acier (1, 1') sont nettoyés au moins autour de la soudure (2),

16. Procédé selon l'une des revendications précédentes, **caractérisé en ce que** le temps de refroidissement de la soudure (2) est prolongé par le faisceau incandescent (15) de telle sorte que la vitesse à laquelle la soudure (2) refroidit est maintenue en dessous de la vitesse de refroidissement avec laquelle, sans l'action du faisceau incandescent (15), il se formerait une martensite au niveau de la soudure.
